# EUROPEAN PATENT APPLICATION

(11) **EP 2 607 733 A1**
(43) Date of publication of application: **26.06.2013**
(21) Application number: 11290596.3
(22) Date of filing: 22.12.2011
(51) Int. Cl.: F16C 35/077, F16C 19/36, F16C 19/38, B61F 15/12

(54) **Bearing unit for use in an axlebox of a railway vehicle and axlebox including the same**

(71) Applicant: Aktiebolaget SKF, 415 50 Göteborg (SE)
(72) Inventor: Blanchard, Xavier, 37540 Saint-Cyr-Loire (FR); Le Moigne, Thierry, 37380 Reugny (FR)
(74) Representative: Kohl, Thomas

(57) **Abstract**

The invention relates to a bearing unit for use in an axlebox of a railway vehicle, including a bearing (10) having an inner ring (12) and a metallic outer ring (14) and rolling elements (48) arranged therebetween. The bearing (10) is configured to support an axle (28) of said railway vehicle. Further, a sleeve (16) surrounding the outer ring (14) of the bearing (10) is provided.

It is proposed that the sleeve (16) is made of a non-metallic material.

## Description

Axlebox housings for railway vehicles as used e. g. in bogies of high velocity trains comprise bearing units supporting high axle loads of typically 20 tons and need to operate properly in a wide range of temperatures and environmental conditions.

In order to ensure a safe functioning of the train including axles and wheels, it is essential to have a regular maintenance schedule, wherein the unsprung mass of the vehicle, in particular the axle and the wheels, are disconnected from the sprung mass, e. g. in order to detect microscopic cracks in the components suspended below the suspension components of the vehicle. The latter include the wheels, wheel bearings, brake rotors, callipers, and/or caterpillar tracks, if any.

The axleboxes in modern high velocity trains do therefore not only have to fulfil their primary function of mechanically transferring loads from the suspension system to the axle bearing and thus to the axle, but further need to provide interfaces for easily disconnecting the sprung mass from the unsprung mass of the vehicle or car.

It is therefore known to use a two-part or three-part design of the axlebox housing including a sleeve surrounding the bearing as a first part, which can be easily disconnected from the rest of the housing, a part of which may remain connected with the suspension system of the train when disconnecting the axle and/or the brake system for maintenance reasons.

The sleeves of such multi-part housings are usually basically cylindrical rings which are precisely machined and made of steel. In order to ensure a good fitting and a reliable and homogenous transfer of the load onto the outer ring of the bearing, while enabling an easy disassembly, the interfaces between the sleeve and the rest of the housing and between the sleeve and the outer ring of the bearing have to be dimensioned with very high precision. This precision can be practically achieved only for very simple, in particular cylindrical shapes such that the range of possible shapes of the circumferential surfaces of the sleeve and of the outer ring of the bearing is very limited.

The invention seeks to overcome the above problems and proposes a bearing unit according to claim 1, which basically integrates the outer ring of the bearing and the sleeve of the housing in one part and an axlebox comprising such a bearing unit. Further advantageous embodiments of the invention can be found in the dependent claims.

The invention starts from a bearing unit for use in an axlebox of a railway vehicle. The vehicle may in particular be a car of a high velocity train, a locomotive or a car of a freight train. The bearing unit includes a bearing having an inner ring and a metallic outer ring and rolling elements arranged therebetween. Preferably, the bearing unit is a double row roller bearing with cylindrical or tapered rollers manufactured according to EN12080 or the like in order to meet the requirements imposed by the extreme operating conditions when supporting an axle of the railway vehicle. The outer ring of the roller bearing is surrounded by a sleeve preferably covering the entire radially outer surface of the outer ring.

It is proposed that the sleeve is made of a non-metallic material. The inventors have found that the conventional exclusive use of high-performance steel for sleeves in multi-part axlebox housings was the result of a technical prejudice, i. e. that the extreme operating conditions require the use of this material. The inventors have found that the requirements may be met with sleeves which may be manufactured in a less expensive way, e. g. of ceramics or polymers.

In particular when the sleeve is made of a polymer material, the flexibility of this material may ensure good fitting properties while keeping the manufacturing costs low. Further, polymer sleeves may be manufactured in a simple way in a wide variety of possible shapes. A perfect connection between the sleeve and the outer ring may be obtained when the sleeve is directly mounted onto the outer ring. The outer ring may in the latter case have a non-cylindrical surface, which may e. g. comprise a concave portion in an axial cross-section ensuring a good and stable connection between the outer ring and the sleeve in an axial direction. This may be realized e. g. by a waisted shape of the outer surface which may have a rotational symmetry around the centre axis of the outer ring for the sake of good machining properties.

As a consequence of the increased freedom of design for the outer ring, a thickness thereof can be basically constant over the width of the two outer raceways formed in the radially inner surface of the outer ring even if the bearing is an angular contact bearing, e. g. a double-row angular contact bearing.

It is preferable that the sleeve has a flat portion on its outer surface in order to simplify a rotational fixation in the rest of the housing.

The sleeve may e. g. have a polygonal cross-section, be quadratic, hexagonal or irregular.

A further aspect of the invention relates to an axlebox for railway vehicles including a bearing unit with a sleeve and a bearing as described above and a metallic axlebox housing accommodating the sleeve with the roller bearing, wherein at least a part of the axlebox is configured to remain connected with a suspension of the railway car when the axle is disconnected from the railway car for maintenance.

In a preferable embodiment of the invention, the sleeve may comprise means for mounting a front cover of the axlebox, e. g. holes for screws or the like. In modern applications, the front cover of axleboxes is often provided with electronic sensors detecting the velocity of rotation of the axle and/or its temperature in order to ensure that no axle of the train is blocking. Various types of front covers with and without sensors and with different types of sensors may be used in different types of trains. Providing the mounting holes or mounting means in or on the sleeve which is made of a non-metallic material, in particular made of plastics, enables a simple adaptation of the bearing unit to the front cover/ sensor system employed. The remaining parts of the bearing unit and the axlebox housing may remain unchanged even if other types of front covers are employed.

The below description of preferred embodiments of the invention and the appended figures as well as the claims comprise multiple features in a specific combination. A skilled person will easily be able to consider further combinations or sub-combinations of these features in order to adapt the invention as defined in the claims to specific needs. The description of the below embodiments of the invention should by no means be construed as limiting the scope of the invention as defined in the claims, but rather to enable the skilled person to carry out the invention for a certain group of applications.
- Fig. 1: is an explosion view of an axlebox including a bearing unit according to the invention;
- Fig. 2: is a cross-sectional view of an axlebox according to Fig. 1;
- Fig. 3: is an axle front view of the axlebox according to Figs 1 and 2;
- Fig. 4: is a cross-sectional view of a second embodiment of the axlebox according to the invention;
- Fig. 5: is a perspective view of the second embodiment of the axlebox according to the invention;
- Fig. 6: is a third embodiment the axlebox according to the invention;
- Fig. 7: illustrates a fourth embodiment of the invention; and
- Fig. 8: is a sixth embodiment of the axlebox according to the invention.

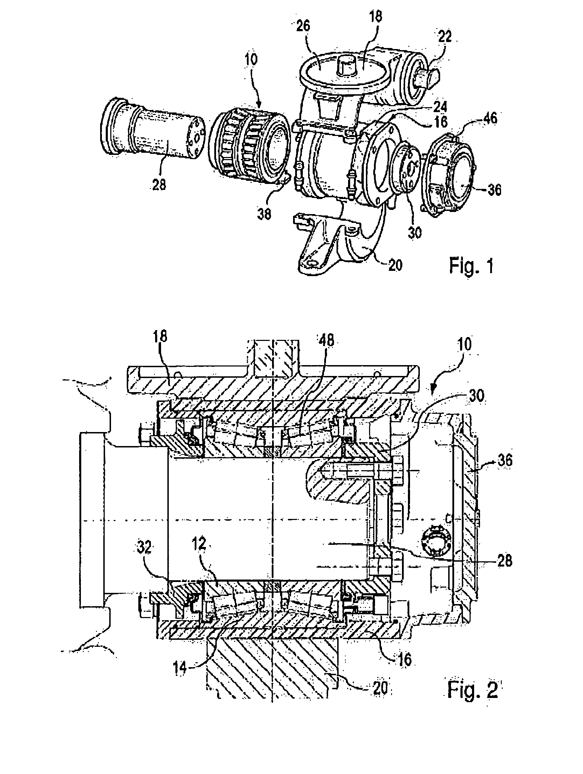

Fig. 1 is an explosion view of an axlebox for railway vehicles including a double-row angular contact tapered roller bearing 10 with an inner ring 12 (Fig. 2) and an outer ring 14 (Fig. 2) and a sleeve 16. Rolling elements 48 formed as cylindrical or tapered rollers are provided between the inner ring 12 and the outer ring 14. The axlebox housing comprises an upper part 18 and a lower part 20 both being made of cast iron, constituting together a swing-arm type axlebox with a journal 22 for connecting the axlebox with a pivot plank of the bogie, so as to enable a pivotal movement around the journal 22.

The upper part 18 and the lower part 20 each comprise a semi-circular shell complementing each other to form a circular bushing for enclosing the sleeve 16 of the bearing unit in the assembled state as shown in Fig. 2. In this state, the upper part 18 and the lower part 20 of the housing exerts a certain pressure onto the sleeve 16 in order to ensure a stable fixation. The sleeve 16 is provided with a flat portion 24 mating with a flat portion (not shown) on the backside of a plate-shaped support of the upper part 18 of the housing, which support 26 is configured to carry the load transmitted via a suspension spring (not shown) arranged thereon.

The end portion of an axle 28 is inserted into the inner ring 12 of the bearing 10 and is provided with threaded holes on its axial end face for receiving bolts for fixing an endplate 30 of the assembly. The endplate 30 and a distance element 32 (Fig. 2) fix the axial position of the inner ring 12 of the bearing 10 on the axle 28.

The upper part 18 and the lower part 20 of the housing are provided with mating through-holes for receiving bolts 34 for closing the housing and for clamping the bearing unit.

A front cover 36 of the bearing unit is provided with sensor means for measuring the rotation and/ or the temperature of the bearing unit in a suitable way. The outer ring 14 of the bearing 10 may be provided with an interface 38 for transferring data and/or measurement currents to the sensors (not shown) provided in the front cover 36.

The front cover 36 is connected to the sleeve 16 by means of bolts engaging with corresponding threaded holes in the sleeve 16 (not shown).

As an important feature of the invention, the sleeve 16 is made of a non-metallic material, in the illustrated case of a polymer material, which may e. g. a polymer of the type PA6.6 with some fibre enforcement, e. g. with 20 % to 30 % of glass fibre. In alternative embodiments, the polymer material might be reinforced with carbon fibres or may be made of engineering ceramics.

Further, although the sleeve 16 may be fitted over the outer ring 14, it is preferable that the sleeve is directly and permanently moulded onto the outer ring, e. g. by injection moulding or the like in order to ensure a reliable fixation.

As shown in Fig. 2, the sleeve 16 of this embodiment is provided with a shoulder 42 protruding radially inward and abutting with the axial end face of the outer ring 14 and an end ring 44 with a backside cover is fitted into an end portion of the sleeve 16 axially protruding over the outer surface of the outer ring 14.

The inner ring 12 is configured as a split ring with a distance ring arranged between its two parts. Alternatively, the inner ring 12 may be a single part supporting the two rows of rolling elements 48.

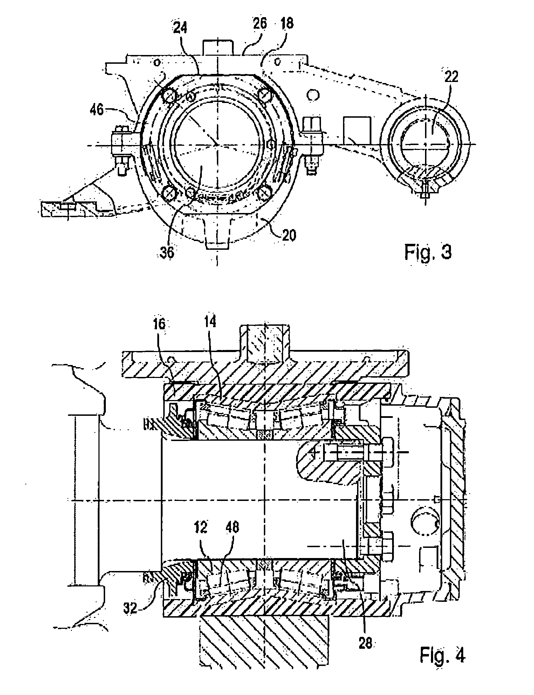

Fig. 3 shows an axial view of the radially assembled axial box. The flat portion 24 of the sleeve 16, which is provided for avoiding a rotation of the sleeve within the semicircular shells of upper part 18 and the lower part 20, is provided on an outer rim 46 of the front cover 36 in the same way.

Due to the fact that the sleeve 16 is formed of plastics or a polymer material instead of metal, the weight of the overall assembly is considerably reduced and the assembly and disassembly is facilitated. Further, all types of corrosion (fretting corrosion, galvanic corrosion, and classic corrosion) may be efficiently avoided and an electric isolation between the housing and the axle 28 is ensured. The latter feature may reduce or eliminate electric damages to bearing elements. No or less machining is needed more manufacturing the sleeve 16, and the number of surfaces to be machined may be reduced. The flexibility of the sleeve 16 reduces the requirements on the precision of the machining of the semicircular shells of the upper part 18 and the lower part 20.

Figs. 4 to 8 show further embodiments of the invention. The following description of these embodiments employs the same reference numbers for features with similar or equivalent functions and is essentially limited to the description of differences to the embodiments of Figs. 1 to 3, whereas the reader is referred to the above description of the first embodiment for features which remain unchanged.

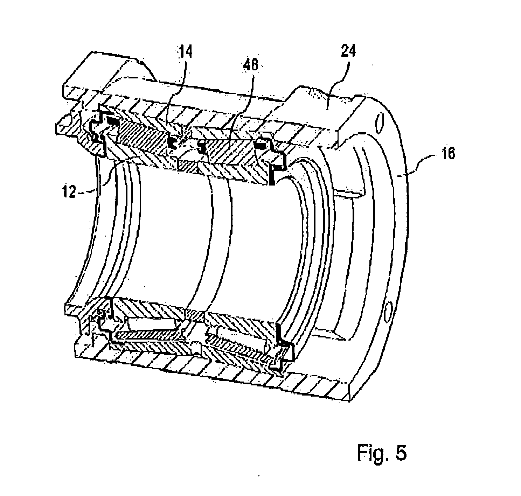

Fig. 4 and 5 show a second embodiment of the invention respectively in a cross-sectional and a cross -sectional perspective view. In this second embodiment, the sleeve 16 is overmoulded over the outer ring 14 of the bearing 10 in an injection moulding process. The sleeve 16 is made of a polymer material which may be reinforced by glass fibres. The outer ring 14 has a radially outer surface, the shape of which corresponds to the shape of a double-cone, i. e. the outer diameter is continuously reduced from the axial ends of the outer ring 14 towards its midpoint in the axial direction.

The decrease of the outer diameter is basically identical to the decreasing outer diameter of the tapered raceways of the outer ring 14 of the angular contact cylindrical roller bearing 10. As a consequence, the thickness of the material constituting the outer ring 14 is essentially constant over the width of the raceway.

The sleeve 16 is perfectly fitted into the concave portion of the outer surface of the outer ring 14, i. e. the portion which is concave in the axial direction or viewed in an axial cross-section and which is arranged in the axial centre portion of the outer ring 14 due to the manufacturing method employed. The outer surface of the sleeve 16 is basically cylindrical and contacts the semicircular shells of the upper part 18 and the lower part 20 of the housing without any gap. The sleeve 16 extends over both axial ends of the outer ring 14 of the bearing 10 and also covers the axial end faces thereof such that an axial relative movement of the outer ring 14 within the sleeve 16 is safely avoided. The part of the sleeve 16 protruding over the axial end of the outer ring 14 in the direction of the end of the axle 28 is provided with mounting holes (not shown) for mounting the front cover 36, whereas the opposite end of the sleeve 16 oriented towards the wheel of the railway vehicle axially overlaps with the radially protruding ring of a distance element 32 with a small gap therebetween preventing a labyrinth seal of the arrangement from impacts of coarse-grained external impurities.

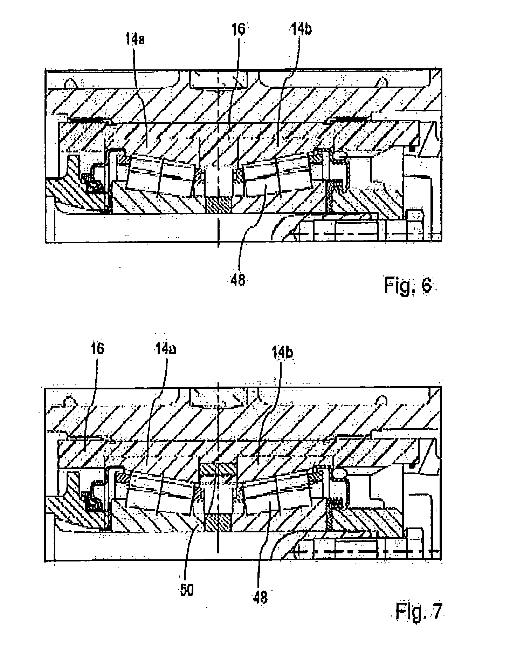

Fig. 6 is a third embodiment of the invention with a split outer ring comprising a left outer ring 14a and a right outer ring 14b, which are simultaneously overmoulded with the sleeve 16 made of polymer material. Each of the outer rings 14a, 14b comprises one raceway for a set of cylindrical or conical rolling elements 48. The alignment of the rings 14a, 14b is adjusted and fixed during the injection moulding procedure connecting the rings 14a, 14b and the sleeve 16 to form a single end non-dismantleable element.

Fig. 7 is a fourth embodiment of the invention with a split outer ring, comprising a left outer ring 14a and a right outer ring 14b, similar to the third embodiment of Fig. 5, wherein a distance element 50 such as a distance ring is integrally cast with the sleeve 16 in order to ensure a predetermined distance between the rings 14a and 14b in axial direction. The distance element 50 may be provided with radial holes allowing for a through flow of the casting material and/or with other types of cast channels.

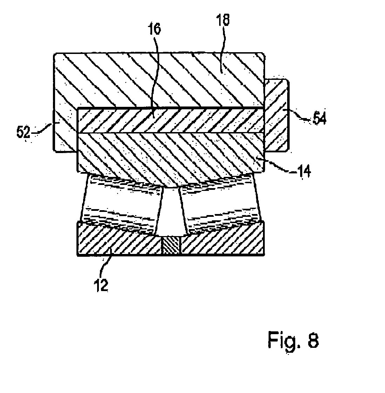

Fig. 8 is a fifth embodiment of the invention wherein the sleeve 16 axially abuts to a metal shoulder 52 of the upper and/or lover housing part 18, 20 in order to more reliably and directly transfer axial loads from the outer ring 14 to the housing 18, 20.

## Claims

1. Bearing unit for use in an axlebox of a railway vehicle, including:
- a bearing (10) having an inner ring (12) and a metallic outer ring (14) and rolling elements (48) arranged therebetween, wherein said bearing (10) is configured to support an axle (28) of said railway vehicle, and
- a sleeve (16) surrounding the outer ring (14) of the bearing (10);
**characterized in that**
said sleeve (16) is made of a non-metallic material.

2. Bearing unit according to claim 1, wherein said sleeve (16) is made of a polymer material.

3. Bearing unit according to one of the preceding claims, wherein said sleeve (16) is directly moulded onto said outer ring (14).

4. Bearing unit according to one of the preceding claims, wherein said outer ring (14) has a non-cylindrical outer surface.

5. Bearing unit according to one of the preceding claims, wherein an outer surface of the outer ring (14) has a concave portion in an axial cross-section.

6. Bearing unit according to one of the preceding claims, wherein said bearing (10) is a double-row angular contact roller bearing, wherein a thickness of said outer ring (14) is basically constant over a width of two outer raceways of said outer ring (14).

7. Bearing unit according to one of the preceding claims, wherein said sleeve (16) has a flat portion (24) in its outer surface.

8. Bearing unit according to one of the preceding claims, wherein the outer ring is split in two parts (14a, 14b) being simultaneously overmoulded with the material of the sleeve (16).

9. Bearing unit according to claim 8, wherein a distance element (50) is arranged between the two parts (14a, 14b) of the outer ring.

10. Bearing unit according to one of the preceding claims, wherein an outer surface of said sleeve (16) has a polygonal cross-section.

11. Axlebox for railway vehicles, including:
- a bearing unit according to one of the preceding claims, and
- a metallic axlebox hosing (18, 20) accommodating the sleeve (16) with the bearing (10),
wherein at least a part (18) of said axlebox housing is configured to remain connected with a suspension of the railway vehicle when said axle (28) is disconnected from the railway vehicle for maintenance.

12. Axlebox according to claim 9, further comprising means for mounting a front cover (36) of the axle box, wherein the means for mounting the axlebox are arranged provided in the sleeve (16).
